(19) Europäisches Patentamt
European Patent Office
Office européen des brevets

(11) **EP 4 258 437 B1**

(12) **EUROPEAN PATENT SPECIFICATION**

(45) Date of publication and mention
of the grant of the patent:
**22.04.2026 Bulletin 2026/17**

(21) Application number: **22722113.2**

(22) Date of filing: **21.02.2022**

(51) International Patent Classification (IPC):
$H01M\ 50/204^{(2021.01)}$    $H01M\ 10/613^{(2014.01)}$
$H01M\ 10/647^{(2014.01)}$    $H01M\ 10/6554^{(2014.01)}$
$H01M\ 10/651^{(2014.01)}$    $H01M\ 10/6555^{(2014.01)}$
$H01M\ 10/617^{(2014.01)}$    $H01M\ 10/658^{(2014.01)}$
$H01M\ 10/653^{(2014.01)}$    $H01M\ 50/209^{(2021.01)}$
$H01M\ 10/6556^{(2014.01)}$    $H01M\ 50/224^{(2021.01)}$

(52) Cooperative Patent Classification (CPC):
H01M 10/617; H01M 10/613; H01M 10/625;
H01M 10/647; H01M 10/6555; H01M 10/6557;
H01M 10/6567; H01M 10/658; H01M 50/209;
H01M 2220/20; Y02E 60/10

(86) International application number:
**PCT/CN2022/077153**

(87) International publication number:
**WO 2023/155212 (24.08.2023 Gazette 2023/34)**

(54) **BATTERY AND ELECTRIC DEVICE**

BATTERIE UND ELEKTRISCHE VORRICHTUNG

BATTERIE ET DISPOSITIF ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.10.2023 Bulletin 2023/41**

(73) Proprietor: **Contemporary Amperex Technology
(Hong Kong) Limited
Central, Central And Western District (HK)**

(72) Inventors:
• **SUN, Zhanyu**
**Ningde City, Fujian 352100 (CN)**
• **CHEN, Xingdi**
**Ningde City, Fujian 352100 (CN)**
• **WANG, Peng**
**Ningde City, Fujian 352100 (CN)**
• **QIN, Feng**
**Ningde City, Fujian 352100 (CN)**
• **HUANG, Xiaoteng**
**Ningde City, Fujian 352100 (CN)**
• **ZHENG, Chenling**
**Ningde City, Fujian 352100 (CN)**

(74) Representative: **Herrero & Asociados, S.L.
Edificio Aqua - Calle Agustín de Foxá, 4-10, 2ºA
28036 Madrid (ES)**

(56) References cited:
WO-A1-2020/096224    CN-A- 1 328 705
CN-A- 111 009 629    CN-U- 209 496 928
JP-A- 2006 244 756    KR-A- 20200 066 421
US-A1- 2013 022 856    US-A1- 2015 200 428

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The present application relates to the field of battery technologies, and in particular, to a battery, a power consumption device, and a method and a device for producing a battery.

**BACKGROUND**

With increasing environmental pollution, the new energy industry has attracted more and more attention. In the new energy industry, the battery technology is an important factor related to their development.

Energy density of the battery is an important parameter in the performance of the battery. However, other performance parameters of the battery also need to be considered when improving the energy density of the battery. Therefore, how to improve the performance of the battery is one urgent technical problem to be solved in the battery technology.

KR20200066421A discloses a lithium secondary battery for a high temperature and high rate with a composite heat dissipation material. A heat dissipation structure (100) is obtained by sequentially stacking, in the order, a primary heat dissipation layer (110) formed of conductive heat insulating materials to be in close contact with a battery cell; a secondary heat dissipation layer (120) formed of aluminum alloy having the thickness of 0.01-0.2 mm, the thermal conductivity of 160-250 W/mK, the density of 2.5-2.8 g/cm$^3$, and the yield strength of 200-300 MPa and configured to absorb heat of the battery cell through the primary heat dissipation layer (110); and an electrical insulation layer (130) for insulating electricity. The heat dissipation structures are arranged between a plurality of battery cells.

US2015200428A1 discloses a battery array with a plurality of stacked cells and a serpentine heat exchanger. The heat exchanger defines passageways for coolant to flow therethrough. The heat exchanger is interleaved with the cells such that opposite sides of each of the cells are in contact with the heat exchanger.

WO2020096224A1 discloses a pouch-type battery cartridge. The pouch-type battery cartridge includes: a metal case in which a pouch-type battery is received; and a plate-shaped heat transfer sheet which is disposed between one surface of the pouch-type battery and one surface of the metal case facing each other, and transfers heat generated in the pouch-type battery toward the metal case.

**SUMMARY**

The scope of the invention is defined by the appended set of claims.

**BRIEF DESCRIPTION OF DRAWINGS**

To describe the technical solution in embodiments of the present application more clearly, the following briefly introduces accompanying drawings required for the embodiments of the present application. Apparently, the accompanying drawings in the following description show merely some embodiments of the present application, and a person of ordinary skill in the art may still derive other drawings from these accompanying drawings without creative efforts.

FIG. 1 is a schematic diagram of a vehicle according to an embodiment of the present application;
FIG. 2 is a schematic diagram of a battery according to an embodiment of the present application;
FIG. 3 is a schematic diagram of a battery cell according to an embodiment of the present application;
FIG. 4 is a schematic diagram of a battery according to an embodiment of the present application;
FIG. 5 is a schematic diagram of a heat conducting member according to an embodiment of the present application;
FIG. 6 is a schematic diagram of a heat conducting member according to an embodiment of the present application;
FIG. 7 is a schematic diagram of a battery according to an embodiment of the present application;
FIG. 8 is a schematic flowchart of a method for producing a battery according to an embodiment of the present application; and
FIG. 9 is a schematic block diagram of a device for producing a battery according to an embodiment of the present application.

In the accompanying drawings, the drawings are not drawn to actual scale.

**DESCRIPTION OF EMBODIMENTS**

The following describes implementations of the present application in detail with reference to accompany drawings and embodiments. The detailed description of the following embodiments and the accompanying drawings are used to exemplarily illustrate principles of the present application, but cannot be used to limit the scope of the present application, that is, the present application is not limited to the described embodiments.

In the depiction of the present application, it is noted that unless otherwise defined, all technological and scientific terms used have the same meanings as those commonly understood by those skilled in the art to which the present application belongs. The terms used are merely for the purpose of describing specific embodiments, but are not intended to limit the present application. The terms "including" and "having" and any variations thereof in the specification and the claims of the present application as well as the brief description of the drawings described above are intended to cover non-exclusive inclusion. "A plurality of" means more than two; and orientations or positional relationships indicated by terms such as "up", "down", "left", "right", "inside", and "outside" are merely for convenience of describing the present application and for simplifying the description, rather than for indicating or implying that an apparatus or element indicated must have a specific orientation, and must be constructed and operated in a specific orientation, which thus may not be understood as a limitation the present application. In addition, the terms "first", "second", "third" and the like are only intended for a purpose of description, and shall not be understood as an indication or implication of relative importance. "Vertical" is not strictly vertical, but within the allowable range of error. "Parallel" is not strictly parallel, but within the allowable range of error.

The phrase "embodiments" referred to in the present application means that the descriptions of specific features, structures, and characteristics in combination with the embodiments are included in at least an embodiment of the present application. The phrase at various locations in the specification does not necessarily refer to the same embodiment, or an independent or alternative embodiment exclusive of another embodiment. Those skilled in the art understand, in explicit and implicit manners, that an embodiment described in the present application may be combined with another embodiment.

The terms representing directions in the following description are all directions shown in the drawings, and do not limit the specific structure of the present application. In the description of the present application, it should be further noted that unless otherwise explicitly specified and defined, the terms "mounting", "connecting" and "connection" should be understood in a broad sense; for example, they may be a fixed connection, a detachable connection, or an integrated connection; may be a direct connection and may also be an indirect connection through an intermediate medium, or may be communication between the interiors of two elements. Those of ordinary skill in the art may appreciate the specific meanings of the foregoing terms in the present application according to specific circumstances.

The term "and/or" in the present application describes only an association relationship for describing associated objects and represents that three relationships may exist. For example, A and/or B may represent the following three cases: only A exists, both A and B exist, and only B exists. In addition, the character "/" in the present application generally indicates that the associated objects before and after the character are in an "or" relation.

In the present application, the battery cell may include a lithium-ion secondary battery, a lithium-ion primary battery, a lithium-sulfur battery, a sodium/lithium-ion battery, a sodium-ion battery or a magnesium-ion battery, etc., which are not limited by the embodiments of the present application. The battery cells may be cylindrical, flat, and cuboid or in another shape, which are not limited by the embodiments of the present application. The battery cells are generally divided into three types according to the way of packaging: cylindrical battery cells, prismatic battery cells and pouch battery cells, which are not limited by the embodiments of the present application.

The battery mentioned in the embodiments of the present application refers to a single physical module that includes one or more battery cells to provide a higher voltage and capacity. For example, the battery mentioned in the present application may include a battery pack, etc. The battery generally includes a box body for enclosing one or more battery cells. The box body may prevent a liquid or other foreign matters from affecting charging or discharging of the battery cell.

The battery cell includes an electrode assembly and an electrolytic solution, and the electrode assembly is composed of a positive electrode sheet, a negative electrode sheet and a separator. The operation of the battery cell mainly relies on movement of metal ions between the positive electrode sheet and the negative electrode sheet. The positive electrode sheet includes a positive electrode current collector and a positive electrode active material layer, the positive electrode active material layer is coated on a surface of the positive electrode current collector, the current collector that is not coated with the positive electrode active material layer protrudes from the current collector coated with the positive electrode active material layer, and the positive electrode current collector that is not coated with the positive electrode active material layer is used as a positive tab. As an example, in a lithium-ion battery, a material of the positive electrode current collector may be aluminum, and the positive electrode active material may be lithium cobalt oxides, lithium iron phosphate, ternary lithium, lithium manganate, or the like. The negative electrode sheet includes a negative electrode current collector and a negative electrode active material layer. The negative electrode active material layer is coated on a surface of the negative electrode current collector, the negative electrode current collector not coated with the negative electrode active material layer protrudes from the negative electrode current collector coated with the negative electrode active material layer, and the negative electrode current collector not coated with the negative electrode active material layer is used as a negative tab. A material of the negative electrode current collector may be copper, and the negative electrode active material may be carbon, silicon, or the like. In order to ensure that no fusing occurs when a large current passes through, there are a plurality of positive tabs which are stacked together, and there are a plurality of negative tabs which are stacked together. A material of the separator may be polypropylene (PP) or polyethylene (PE), etc. In addition, the electrode assembly may be a winding structure or a laminated structure, and the embodiments of the present application are not limited thereto.

In order to meet different power demands, the battery may include a plurality of battery cells, where the plurality of battery cells may be in series connection, parallel connection or series-parallel connection. The series-parallel connection refers to a combination of series connection and parallel connection. Optionally, a plurality of battery cells may be first connected in series, in parallel or in series and parallel to form a battery module, and then a plurality of battery modules are connected in series, in parallel or in series and parallel to form a battery. That is, a plurality of battery cells may directly form a battery, or may first form a battery module, and then battery modules form a battery. The battery is further provided in a power consumption device to provide electrical energy for the power consumption device.

The development of the battery technology is necessary to consider design factors in multiple aspects simultaneously, such as energy density, cycle life, discharge capacity, C-rate, safety, etc. Among them, when an internal space of the battery is fixed, improving the utilization rate of the internal space of the battery is an effective means to improve the energy density of the battery. However, while improving the utilization rate of the internal space of the battery, other parameters of the battery also need to be considered, such as insulation and heat conduction.

In view of this, a technical solution of the embodiments of the present application is provided. A heat conducting member is provided in the battery to be connected to a first wall with the largest surface area of each battery cell in a plurality of battery cells arranged along a first direction, where the heat conducting member is configured to conduct heat of the battery cell, the surface of the heat conducting member connected to the first wall is an insulating surface, and a dimension of the heat conducting member in a second direction perpendicular to the first wall is 0.1~100 mm. In this way, there is no need to set a beam and other structures in the middle of a box body of the battery, which may maximize a space utilization rate inside the battery, thereby improving the energy density of the battery; meanwhile, the above heat conducting member may also be used to ensure electrical insulation and heat conduction in the battery. Therefore, the technical solution of the embodiments of the present application may improve the energy density of the battery while ensuring the electrical insulation and heat conduction of the battery, thereby improving performance of the battery.

The technical solutions described in the embodiments of the present application are all applicable to various devices using batteries, such as mobile phones, portable apparatuses, notebook computers, electromobiles, electronic toys, electric tools, electric vehicles, ships and spacecrafts. For example, the spacecrafts include airplanes, rockets, space shuttles, spaceships, etc.

It should be understood that the technical solutions described in the embodiments of the present application are not only applicable to the devices described above, but also applicable to all devices using the batteries. However, for brief description, the following embodiments are all described by an example of an electric vehicle.

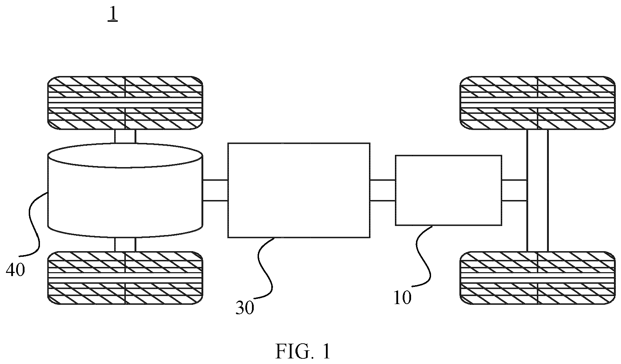

For example, as shown in FIG. 1, it is a schematic structural diagram of a vehicle 1 according to an embodiment of the present application. The vehicle 1 may be a fuel-powered vehicle, a gas-powered vehicle or a new energy vehicle, and the new energy vehicle may be a battery electric vehicle, a hybrid vehicle, an extended-range vehicle, or the like. A motor 40, a controller 30 and a battery 10 may be provided inside the vehicle 1, and the controller 30 is configured to control the battery 10 to supply power to the motor 40. For example, the battery 10 may be provided at the bottom or the head or the tail of the vehicle 1. The battery 10 may be used to supply the power to the vehicle 1. For example, the battery 10 may be used as an operation power supply of the vehicle 1 and is used for a circuit system of the vehicle 1, for example, for a working power demand of the vehicle 1 during startup, navigation and running. In another embodiment of the present application, the battery 10 may be used not only as the operation power supply of the vehicle 1 but also as a driving power supply of the vehicle 1, replacing or partially replacing fuel or natural gas to provide driving power for the vehicle 1.

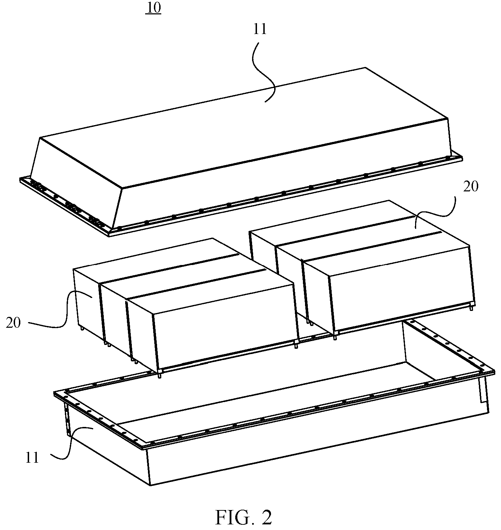

In order to satisfy different usage power demands, the battery 10 may include a plurality of battery cells. For example, as shown in FIG. 2, it is a schematic structural diagram of a battery 10 according to an embodiment of the present application. The battery 10 may include a plurality of battery cells 20. The battery 10 may further include a box body 11 with a hollow structure inside, and the plurality of battery cells 20 are accommodated in the box body 11. For example, the plurality of battery cells 20 are connected in series or in parallel or in series and parallel, and are then placed in the box body 11.

Optionally, the battery 10 may also include other structures, which is not described in detail herein. For example, the battery 10 may also include a busbar component. The busbar component is configured to implement an electrical connection between the plurality of battery cells 20, such as parallel connection, series connection or series-parallel connection. Specifically, the busbar component may implement the electrical connection among the battery cells 20 by connecting electrode terminals of the battery cells 20. Furthermore, the busbar component may be fixed to the electrode terminals of the battery cells 20 by means of welding. The electrical energy of the plurality of battery cells 20 may be further led out through an electrically conductive mechanism passing through the box body. Optionally, the electrically conductive mechanism may also belong to the busbar component.

According to different power demands, the number of the battery cells 20 may be set to any value. The plurality of battery cells 20 may be connected in series, in parallel or in series and parallel to implement larger capacity or power. Since there may be many battery cells 20 included in each battery 10, the battery cells 20 may be provided in groups for convenience of installation, and each group of the battery cells 20 form a battery module. The number of the battery cells 20 included in the battery module is not limited and may be set according to needs. The battery may include a plurality of battery modules, and these battery modules may be connected in series, in parallel or in series and parallel.

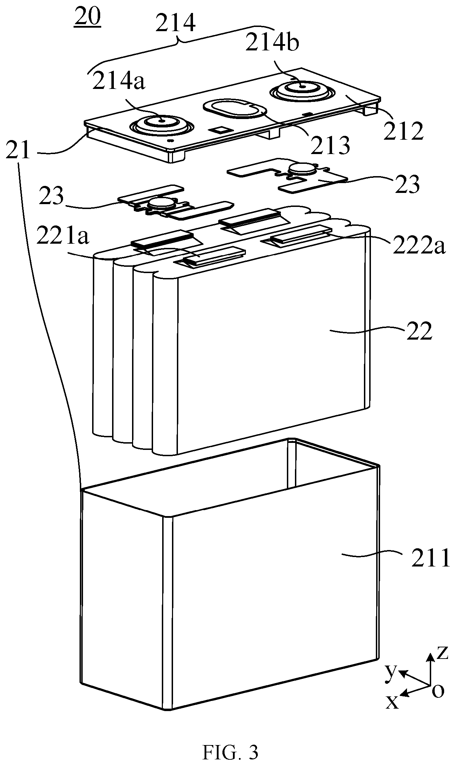

As shown in FIG. 3, it is a schematic structural diagram of a battery cell 20 according to an embodiment of the present application. The battery cell 20 includes one or more electrode assemblies 22, a housing 211 and a cover plate 212. The housing 211 and the cover plate 212 form a shell or a battery box 21. A wall of the housing 211 and the cover plate 212 are both referred as a wall of the battery cell 20, where for a cuboid battery cell 20, the wall of the housing 211 includes a bottom wall and four side walls. The housing 211 is shaped according to a shape of one or more electrode assemblies 22 after combination. For example, the housing 211 may be a hollow cuboid or cube or cylinder, and one surface of the housing 211 has an opening so that one or more electrode assemblies 22 may be placed in the housing 211. For example, when the housing 211 is a hollow cuboid or cube, one plane of the housing 211 is an opening face, that is, the plane does not have a wall, so that the inside and outside of the housing 211 are in communication with each other. When the housing 211 may be a hollow cylinder, an end face of the housing 211 is the opening face, that is, the end face does not have a wall, so that the inside and outside of the housing 211 are in communication with each other. The cover plate 212 covers the opening and is connected to the housing 211 to form an enclosed cavity in which the electrode assembly 22 is placed. The housing 211 is filled with an electrolyte, such as an electrolytic solution.

The battery cell 20 may further include two electrode terminals 214, and the two electrode terminals 214 may be provided on the cover plate 212. The cover plate 212 is generally in the shape of a flat plate, and the two electrode terminals 214 are fixed on a flat plate face of the cover plate 212. The two electrode terminals 214 are a positive electrode terminal 214a and a negative electrode terminal 214b, respectively. Each electrode terminal 214 is correspondingly provided with a connecting member 23 also called a current collecting member 23, which is located between the cover plate 212 and the electrode assembly 22 and used to electrically connect the electrode assembly 22 to the electrode terminal 214.

As shown in FIG. 3, each electrode assembly 22 has a first tab 221a and a second tab 222a. The polarity of the first tab 221a and the second tab 222a are opposite. For example, when the first tab 221a is a positive tab, the second tab 222a is a negative tab. The first tab 221a of the one or more electrode assemblies 22 is connected to one electrode terminal through one connecting member 23, and the second electrode tab 222a of the one or more electrode assemblies 22 is connected to the other electrode terminal through the other connecting member 23. For example, the positive electrode terminal 214a is connected to the positive electrode tab through one connecting member 23, and the negative electrode terminal 214b is connected to the negative tab through the other connecting member 23.

In the battery cell 20, according to actual usage needs, there may be a single or a plurality of electrode assemblies 22. As shown in FIG. 3, four independent electrode assemblies 22 are provided in the battery cell 20.

A pressure relief mechanism 213 may also be provided on the battery cell 20. The pressure relief mechanism 213 is configured to be actuated when an internal pressure or temperature of the battery cell 20 reaches a threshold value to relieve the internal pressure or temperature.

The pressure relief mechanism 213 may be in various possible pressure relief structures, which is not limited in the embodiments of the present application. For example, the pressure relief mechanism 213 may be a temperature-sensitive pressure relief mechanism, the temperature-sensitive pressure relief mechanism is configured to be capable of being melted when the internal temperature of the battery cell 20 provided with the pressure relief mechanism 213 reaches a threshold value; and/or the pressure relief mechanism 213 may be a pressure-sensitive pressure relief mechanism, the pressure-sensitive pressure relief mechanism is configured to be capable of being fractured when an internal gas pressure of the battery cell 20 provided with the pressure relief mechanism 213 reaches a threshold value.

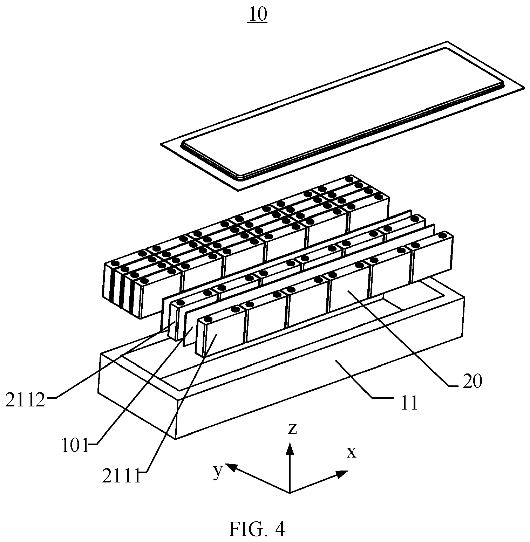

FIG. 4 shows a schematic structural diagram of a battery 10 according to an embodiment of the present application.

The battery 10 includes a plurality of battery cells 20 arranged along a first direction x and a heat conducting member 101.

The first direction x is an arrangement direction of one column of the battery cells 20 in the battery 10. That is, one column of the battery cells 20 in the battery are arranged along an x direction. The number of battery cells 20 in one column of the battery cells 20 may be 2-20, but this is not limited by the embodiments of the present application.

The heat conducting member 101 extends along the first direction x and is connected to a first wall 2111 of each battery cell 20 in the plurality of battery cells 20, and the first wall 2111 is a wall with the largest surface area in the battery cell 20.

The battery cell 20 may include a plurality of walls, and the first wall 2111 with the largest surface area in the battery cell 20 connects with the heat conducting member 101. That is, the first wall 2111 of the battery cell 20 faces the heat conducting member 101, that is, the first wall 2111 of the battery cell 20 is parallel with the first direction x.

The heat conducting member 101 is configured to conduct heat of the battery cell 20, and a surface of the heat conducting member 101 connected to the first wall 2111 is an insulating surface. The heat conducting member 101 is used to conduct the heat of the battery cell 20, which may ensure the temperature of the battery cell 20 in a normal state. The surface of the heat conducting member 101 connected to the first wall 2111 is the insulating surface, which may ensure the electrical insulation between the heat conducting member 101 and the battery cell 20.

A dimension of the heat conducting member 101 in a second direction y is 0.1~100mm, and the second direction y is perpendicular to the first wall 2111.

In the embodiments of the present application, a heat conducting member 101 is provided in the battery 10 to be connected to the first wall 2111 with the largest surface area of each battery cell 20 in the plurality of battery cells 20 arranged along the first direction x. In this way, there is no need to set the beam and other structures in the middle of the box body 11 of the battery 10, which may maximize the space utilization rate inside the battery 10, thereby improving the energy density of the battery 10.

Correspondingly, in order to ensure the performance of the battery 10, the heat conducting member 101 should take into account strength requirements. In the embodiments of the present application, when a dimension $T2$ of the heat conducting member 101 in the second direction y is 0.1~100mm, both strength and space requirements may be taken into consideration.

Specifically, the dimension $T2$ of the heat conducting member 101 in the second direction y, that is a thickness of the heat conducting member 101 is larger, a strength of the heat conducting member 101 is high; and when $T2$ is smaller, less space is occupied. When $T2 < 0.1$ mm, the heat conducting member 101 is easily damaged under the action of an external force; and when $T2 > 100$ mm, too much space is occupied, thus affecting the energy density. Therefore, when the dimension $T2$ of the heat conducting member 101 in the second direction y is 0.1~100mm, the space utilization rate may be improved while ensuring the strength.

In the embodiments of the present application, the heat conducting member 101 is provided in the battery 10 to be connected to the first wall 2111 with the largest surface area of each battery cell 20 in the plurality of battery cells 20 arranged along the first direction x, where the heat conducting member 101 is configured to conduct heat of the battery cell 20, the surface of the heat conducting member 101 connected to the first wall 2111 is the insulating surface, and the dimension of the heat conducting member 101 in the second direction y perpendicular to the first wall 2111 is 0.1~100 mm. In this way, there is no need to set the beam and other structures in the middle of the box body 11 of the battery 10, which may maximize the space utilization rate inside the battery 10, thereby improving the energy density of the battery 10; meanwhile, the above heat conducting member 101 may also be used to ensure the electrical insulation and heat conduction in the battery 10. Therefore, the technical solution of the embodiments of the present application may improve the energy density of the battery 10 while ensuring the electrical insulation and heat conduction in the battery 10, thereby improving the performance of the battery 10.

Optionally, in an embodiment of the present application, the heat conducting member 101 may be a non-metallic material plate. That is, the heat conducting member 101 is made of a non-metallic insulating material as a whole.

Optionally, in an embodiment of the present application, the heat conducting member 101 may include a metal plate and an insulating layer, and the insulating layer is provided on a surface of the metal plate.

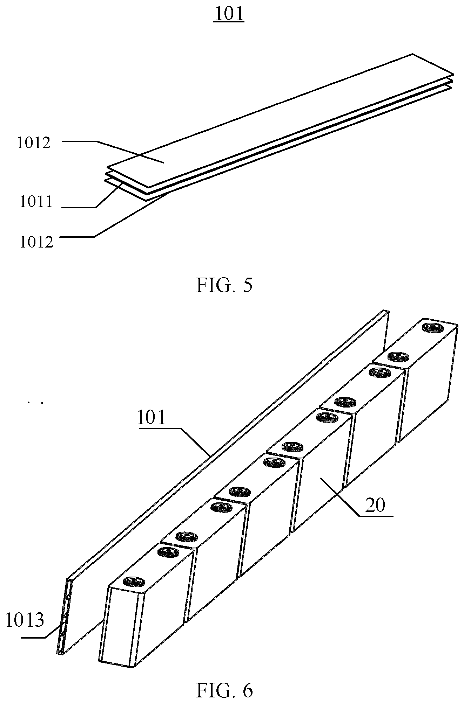

FIG. 5 is a schematic diagram of a heat conducting member 101 according to an embodiment of the present application. As shown in FIG. 5, and according to the invention the heat conducting member 101 includes a metal plate 1011 and an insulating layer 1012, and the insulating layer 1012 is provided on a surface of the metal plate 1011. Through this arrangement, the metal plate 1011 may ensure the strength of the heat conducting member 101, and the insulating layer 1012 may make the surface of the heat conducting member 101 connected to the first wall 211 the insulating surface. Optionally, the insulating layer 1012 may be an insulating film bonded to the surface of the metal plate 1011 or an insulating varnish coated on the surface of the metal plate 1011.

According to the invention, as shown in FIG. 6, a cavity 1013 is provided in the heat conducting member 101. The cavity 1013 may reduce weight of the heat conducting member while ensuring the strength of the heat conducting member 101, for example, it may be applied to the case where a thickness $T2$ of the heat conducting member 101 is larger, In addition, the cavity 1013 may make the heat conducting member 101 have a larger compression space in the second direction y, so that a larger expansion space may be provided for the battery cell 20.

Optionally, in an embodiment of the present application, the cavity 1013 may be configured to accommodate a fluid to adjust the temperature of the battery cell 20.

The fluid may be a liquid or a gas, and temperature adjustment means heating or cooling the plurality of battery cells 20. In the case of cooling the battery cell 20, the cavity 1013 may accommodate a cooling medium to adjust the temperature of the plurality of battery cells 20. In this case, the fluid may also be called a cooling medium or a cooling fluid, more specifically, may be called a cooling liquid or a cooling gas. In addition, the fluid may also be configured to heat, which is not limited by the embodiments of the present application. Optionally, the fluid may flow in a circulating manner to achieve a better temperature adjustment effect. Optionally, the fluid may be water, a mixture of water and ethylene glycol, refrigerant or air, or the like.

Optionally, in an embodiment of the present application, a dimension $T1$ of the battery cell 20 in the second direction y and a dimension T2 of the heat conducting member 101 in the second direction satisfy: 0<T2/T1≤7.

When T2/T1 is too large, the heat conducting member 101 occupies larger space, which affects the energy density. In addition, the heat conducting member 101 conducts the heat to the battery cell 20 too quickly, which may also cause safety problems. For example, thermal runaway of one battery cell 20 may cause thermal runaway of other battery cells 20 connected to the same heat conducting member 101. When 0<T2/T1≤7, the energy density of the battery 10 may be ensured and the safety performance of the battery 10 may also be ensured.

Optionally, in an embodiment of the present application, a dimension T1 of the battery cell 20 in the second direction y and a dimension T2 of the heat conducting member 101 in the second direction may further satisfy 0<T2/T1≤1, so as to further improve the energy density of the battery 10 and guarantee the safety performance of the battery 10.

Optionally, in an embodiment of the present application, a weight M1 of the battery cell 20 and a weight M2 of the heat conducting member 101 satisfy: 0<M2/M1≤20.

When M2/M1 is too large, gravimetric energy density may be lost. When 0<M2/M1≤20, the gravimetric energy density of the battery 10 may be ensured and the safety performance of the battery 10 may also be ensured.

Optionally, in an embodiment of the present application, a weight M1 of the battery cell 20 and a weight M2 of the heat conducting member 101 may further satisfy 0.1≤M2/M1≤1, so as to further improve the energy density of the battery 10 and guarantee the safety performance of the battery 10.

Optionally, in an embodiment of the present application, an area S1 of the first wall 2111 and an area S2 of a surface of the heat conducting member 101 connected to the first wall of one column of the plurality of battery cells 20 satisfy: 0.2≤S2/S1≤30.

S2 is a total area of one side surface of the heat conducting member 101 connected to the battery cell 20. When S2/S1 is too large, the energy density is affected. When S2/S1 is too small, a heat conducting effect is too poor, which affects the safety performance. When 0.2<S2/S1≤30, the energy density of the battery 10 may be ensured and the safety performance of the battery 10 may also be ensured.

Optionally, in an embodiment of the present application, S2 and S1 may further satisfy 0.1≤S2/S1≤10, so as to further improve the energy density of the battery 10 and guarantee the safety performance of the battery 10.

Optionally, in an embodiment of the present application, a specific heat capacity Q of the heat conducting member 101 and a weight M2 of the heat conducting member 101 satisfy: 0.02 KJ/(kg$^2$*°C)≤Q/M2≤100 KJ/(kg$^2$*°C).

When Q/M2<0.02 KJ/(kg$^2$*°C), the heat conducting member 101 may absorb more energy, resulting in too low temperature of the battery cell 20, which may cause lithium evolution; and when Q/M2>100 KJ/(kg$^2$*°C), capacity of heat conducting of the heat conducting member 101 is poor, and the heat may not be taken away in time. When 0.02 KJ/(kg$^2$*°C)≤Q/M2≤100 KJ/(kg$^2$*°C), the safety performance of the battery 10 may be ensured.

Optionally, in an embodiment of the present application, Q and M2 may further satisfy 0.3 KJ/(kg$^2$*°C)≤Q/M2≤20 KJ/(kg$^2$*°C), so as to further improve the safety performance of the battery 10.

Optionally, in an embodiment of the present application, the battery cell 20 includes the two first walls 2111 provided opposite to each other in the second direction y and two second walls 2112 provided opposite to each other in the first direction x, where the second walls 2112 of the two adjacent battery cells 20 are opposite. That is, for a prismatic battery cell 20, its large side face, that is the first wall 2111, connects with the heat conducting member 101, and its small side face, that is, the second wall 2112, connects with the adjacent second walls 2112 of the battery cell 20, so as to be arranged in one column in the first direction x. In this way, the first wall 2111 with a large area is adopted to connect with the heat conducting member 101, which is beneficial to heat exchange of the battery cell 20 and ensure the performance of the battery 10.

According to the invention, the battery 10 includes a plurality of columns of the plurality of battery cells 20 arranged along the first direction x and a plurality of heat conducting members 101, and where the plurality of columns of the battery cells 20 and the plurality of heat conducting members 101 are provided alternately in the second direction y. That is, the plurality of columns of the battery cells 20 and the plurality of heat conducting members 101 may be arranged according to the heat conducting member 101, one column of the battery cells 20, the heat conducting member 101..., or one column of the battery cells 20, the heat conducting member 101, one column of the battery cells 20.... In this way, the plurality of columns of the battery cells 20 and the plurality of heat conducting members 101 are connected to each other to form a whole to be accommodated in the box body 11, which may not only conduct the effective heat conduction for each column of the battery cells 20, but also ensure an overall structural strength of the battery 10, thereby improving the performance of the battery 10.

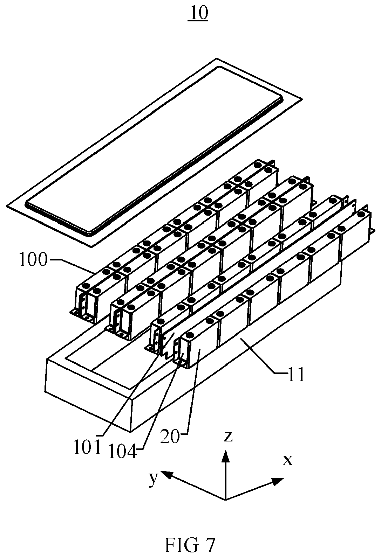

FIG. 7 shows a schematic structural diagram of a battery 10 according to another embodiment of the present application. As shown in FIG. 7, the battery 10 may include a plurality of battery modules 100. The battery module 100 may include at least one column of the plurality of battery cells 20 arranged along the first direction x and the at least one heat conducting member 101, and the at least one column of the battery cells 20 and the at least one heat conducting member 101 are provided alternately in the second direction y. That is, for each battery module 100, one column of the battery cells 20 and the heat conducting member 101 are provided alternately in the second direction y, and the plurality of battery modules 100 are accommodated in the box body 11 to form the battery 10.

Optionally, the battery module 100 may include N columns of the battery cells 20 and the N-1 heat conducting member(s) 101, the heat conducting member(s) 101 is provided between two adjacent columns of the battery cells 20, and N is an integer greater than 1. That is, the heat conducting member(s) 101 is provided inside the battery module 100, and the heat conducting member(s) 101 is not provided on an outer side of the battery module 100. For example, one heat conducting member 101 is provided between two columns of the battery cells 20, two heat conducting members 101 are provided between three columns of the battery cells 20, and so on.

Optionally, in an embodiment of the present application, as shown in FIG. 7, the battery module 100 includes two columns of the battery cells 20, that is, N=2. Correspondingly, one heat conducting member 101 is provided in the two columns of the battery cells 20. The heat conducting member 101 is not provided between the adjacent battery modules 100. In this way, fewer heat conducting members 101 may be provided in the battery 10 in this embodiment, but at the same time, it may ensure that each battery cell 20 may be connected to the heat conducting member 101.

Optionally, in an embodiment of the present application, the plurality of battery modules 100 are arranged along the second direction y, and there is a gap between the adjacent battery modules 100. There is no heat conducting member 101 between the adjacent battery modules 100 with a certain gap. The gap between the adjacent battery modules 100 may provide the expansion space for the battery cell 20.

Optionally, a fixing structure is provided on an end portion of the heat conducting member 101 in the first direction x, and the heat conducting member 101 is fixed to the box body 11 through the fixing structure. As shown in FIG. 7, the fixing structure may include a fixing plate 104, the fixing plate 104 is fixedly connected to the end portion of the heat conducting member 101 and is connected to the battery cell 20 located at the end portion of the heat conducting member 101, so as to enhance a fixing effect on the battery cell 20.

Optionally, in an embodiment of the present application, the heat conducting member 101 may be bonded to the first wall 2111. That is, the heat conducting member 101 and the battery cell 20 may be fixedly connected by means of bonding, such as bonding by a structural glue, but this is not limited by the embodiments of the present application.

Optionally, the battery cell 20 may be bonded and fixed to the box body 11. Optionally, the adjacent battery cells 20 in each column of the battery cells 20 may also be bonded, for example, the second walls 2112 of the two adjacent battery cells 20 are bonded by the structural glue, but this is not limited by the embodiments of the present application. The fixing effect of the battery cell 20 may be further enhanced by bonding and fixing the adjacent battery cells 20 in each column of the battery cells 20.

It should be understood that the relevant parts in each embodiment of the present application may be referred to each other, and for the sake of brevity, details are not described herein again.

An embodiment of the present application further provides a power consumption device, which may include the battery 10 in the above embodiments. Optionally, the power consumption device may be a vehicle 1, a ship or a spacecraft, or the like, but this is not limited by the embodiments of the present application.

The battery 10 and the power consumption device of the embodiments of the present application are described above, and a method and a device for producing a battery of the embodiments of the present application will be described below. For the parts that are not described in detail, reference is made to the foregoing embodiments.

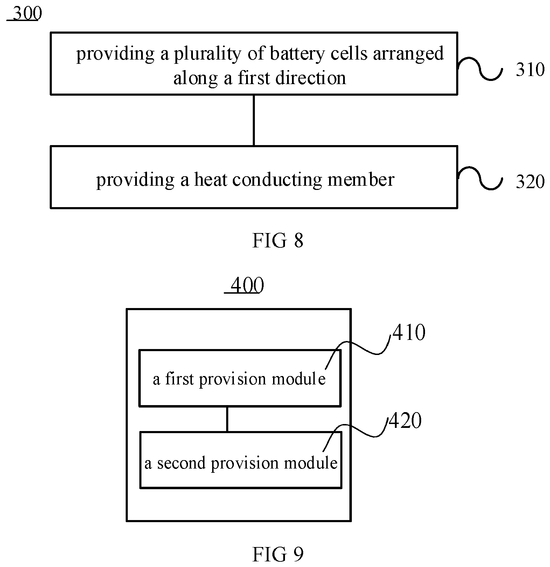

FIG. 8 shows a schematic flowchart of a method 300 for producing a battery according to an embodiment of the present application. As shown in FIG. 8, the method 300 may include:

310, providing a plurality of battery cells 20 arranged along a first direction x;

320, providing a heat conducting member 101, the heat conducting member 101 extending along the first direction x and connected to a first wall 2111 of each battery cell 20 in the plurality of battery cells 20, the first wall 2111 being a wall with the largest surface area in the battery cell 20, the heat conducting member 101 being configured to conduct heat of the battery cell 20, and a surface of the heat conducting member 101 connected to the first wall 2111 being an insulating surface; and where a dimension of the heat conducting member 101 in a second direction y is 0.1~100mm, and the second direction y is perpendicular to the first wall 2111.

FIG. 9 shows a schematic block diagram of a device 400 for producing a battery according to an embodiment of the present application. As shown in FIG. 9, the device 400 for producing a battery may include:

a first provision module 410 configured to provide a plurality of battery cells 20 arranged along a first direction x;

a second provision module 420 configured to provide a heat conducting member 101, the heat conducting member 101 extending along the first direction x and connected to a first wall 2111 of each battery cell 20 in the plurality of battery cells 20, the first wall 2111 being a wall with the largest surface area in the battery cell 20, the heat conducting member 101 being configured to conduct heat of the battery cell 20, and a surface of the heat conducting member 101 connected to the first wall 2111 being an insulating surface; and where a dimension of the heat conducting member 101 in a second direction y is 0.1~100mm, and the second direction y is perpendicular to the first wall 2111.

Hereinafter, the embodiments of the present application are illustrated. The embodiments described hereinafter are illustrative, which are only used to explain the present application, and should not be understood as limiting the present application. If no specific technique or condition is indicated in the embodiments, it shall be carried out in accordance with the technique or condition described in the literature in the art or in accordance with the product specification.

The battery cell 20 and the heat conducting member 101 shown in the drawings are adopted, where the number of the battery cells 20 in one column of the battery cells 20 is 2-20, and a safety test on the battery 10 is carried out according to GB38031-2020. Test results are shown in Table 1-Table 4.

Table 1

| Number | T2/mm | T1/mm | T2/T1 | Test Results |
|--------|-------|-------|-------|--------------|
| 1 | 0.2 | 40 | 0.005 | No Fire, No Explosion |
| 2 | 0.4 | 50 | 0.008 | No Fire, No Explosion |
| 3. | 0.7 | 45 | 0.016 | No Fire, No Explosion |
| 4 | 4 | 10 | 0.4 | No Fire, No Explosion |
| 5 | 4 | 40 | 0.1 | No Fire, No Explosion |
| 6 | 45 | 15 | 3 | No Fire, No Explosion |
| 7 | 150 | 10 | 15 | Fire, Explosion |

Table 2

| Number | M2/Kg | M1/Kg | M2/M1 | Test Results |
|--------|-------|-------|-------|--------------|
| 1 | 0.2 | 3 | 0.068 | No Fire, No Explosion |
| 2 | 0.4 | 2.5 | 0.16 | No Fire, No Explosion |
| 3 | 0.7 | 1.5 | 0.467 | No Fire, No Explosion |
| 4 | 10 | 1.5 | 6.7 | No Fire, No Explosion |
| 5 | 15 | 1 | 15 | No Fire, No Explosion |

Table 3

| Number | $S2/mm^2$ | $S1/mm^2$ | S2/S1 | Test Results |
|--------|-----------|-----------|-------|--------------|
| 1 | 3120 | 21728 | 0.14 | Fire, Explosion |
| 2 | 19500 | 38800 | 0.5 | No Fire, No Explosion |
| 3 | 65000 | 16800 | 3.87 | No Fire, No Explosion |
| 4 | 130000 | 16576 | 7.84 | No Fire, No Explosion |
| 5 | 216000 | 9600 | 22.5 | No Fire, No Explosion |
| 6 | 250000 | 7200 | 34.72 | Fire, Explosion |

Table 4

| Number | Q/KJ/(Kg*°C) | M2/Kg | $Q/M2(KJ/(kg^2*°C))$ | Test Results |
|--------|--------------|-------|----------------------|--------------|
| 1 | 0.39 | 25 | 0.016 | Fire, Explosion |
| 2 | 0.46 | 5 | 0.092 | No Fire, No Explosion |
| 3 | 0.88 | 0.5 | 1.76 | No Fire, No Explosion |
| 4 | 4 | 0.4 | 10 | No Fire, No Explosion |
| 5 | 4 | 0.1 | 40 | No Fire, No Explosion |
| 6 | 4 | 0.025 | 160 | Fire, Explosion |

It can be seen from the above test results that the battery 10 provided by the present application may meet safety performance requirements.

**Claims**

1. A battery, **characterized in that** it comprises:

   a plurality of battery cells (20) arranged along a first direction (x);
   a heat conducting member (101) being a flat plate extending along the first direction (x) and connected to a first wall (2111) of each battery cell (20) in the plurality of battery cells (20), the first wall (2111) being a wall with the largest surface area in the battery cell (20), the heat conducting member (101) being configured to conduct heat of the battery cell (20), and a surface of the heat conducting member (101) connected to the first wall (2111) being an insulating surface, the first wall (2111) is parallel with the first direction (x);
   wherein a dimension of the heat conducting member (101) in a second direction (y) is 0.1~100mm, and the second direction (y) is perpendicular to the first wall (2111);
   wherein the battery cell (20) comprises the two first walls (2111) provided opposite to each other in the second direction (y) and two second walls (2112) provided opposite to each other in the first direction (x), and wherein the second walls (2112) of the two adjacent battery cells (20) are opposite in the first direction (x);
   wherein the heat conducting member (101) comprises a metal plate (1011) and an insulating layer (1012), and the insulating layer (1012) is provided on a surface of the metal plate (1011);
   wherein a cavity (1013) is provided in the heat conducting member (101);
   and wherein the battery comprises a plurality of columns of the plurality of battery cells (20) arranged along the first direction (x) and a plurality of heat conducting members (101), and wherein the plurality of columns of the battery cells (20) and the plurality of heat conducting members (101) are provided alternately in the second direction (y).

2. The battery according to claim 1, wherein the heat conducting member (101) is a non-metallic material plate.

3. The battery according to claim 1, wherein the cavity (1013) is configured to accommodate a fluid to adjust temperature of the battery cell (20).

4. The battery according to any one of claims 1 to 3, wherein a dimension T1 of the battery cell (20) in the second direction (y) and a dimension T2 of the heat conducting member (101) in the second direction (y) satisfy: $0 < T2/T1 \le 7$.

5. The battery according to claim 4, wherein $0 < T2/T1 \le 1$.

6. The battery according to any one of claims 1 to 5, wherein a weight M1 of the battery cell (20) and a weight M2 of the heat conducting member (101) satisfy:

$$0 < M2/M1 \le 20.$$

7. The battery according to claim 6, wherein $0.1 \le M2/M1 \le 1$.

8. The battery according to any one of claims 1 to 7, wherein an area S1 of the first wall (2111) and an area S2 of a surface of the heat conducting member (101) connected to the first wall (2111) of the plurality of battery cells (20) satisfy:

$$0.2 \le S2/S1 \le 30.$$

9. The battery according to claim 8, wherein $2 \le S2/S1 \le 10$.

10. The battery according to any one of claims 1 to 9, wherein a specific heat capacity Q of the heat conducting member (101) and a weight M2 of the heat conducting member (101) satisfy: $0.02\ KJ/(kg^{2} \cdot {}^\circ C) \le Q/M2 \le 100\ KJ/(kg^{2} \cdot {}^\circ C)$.

11. The battery according to claim 10, wherein $0.3\ KJ/(kg^{2} \cdot {}^\circ C) \le Q/M2 \le 20\ KJ/(kg^{2} \cdot {}^\circ C)$. along the

12. The battery according to any one of claims 1 to 11, wherein the battery comprises a plurality of battery modules (100), the battery module (100) comprises at least one column of the plurality of battery cells (20) arranged along the first direction (x) and the at least one heat conducting member (101), and the at least one column of the battery cells (20) and the at least one heat conducting member (101) are provided alternately in the second direction (y).

13. The battery according to claim 12, wherein the battery module (100) comprises N columns of the battery cells (20) and the N-1 heat conducting member(s) (101), the heat conducting member(s) (101) is provided between two adjacent columns of the battery cells (20), and N is an integer greater than 1.

14. The battery according to claim 12 or 13, wherein the plurality of battery modules (100) are arranged along the second direction (y), and there is a gap between the adjacent battery modules (100).

15. The battery according to any one of claims 1 to 14, wherein the heat conducting member is bonded to the first wall (2111).

16. A power consumption device, comprising: the battery (10) according to any one of claims 1 to 15, and the battery (10) being configured to provide electric energy.


**Patentansprüche**

1. Batterie, **dadurch gekennzeichnet, dass** sie Folgendes umfasst:

   mehrere Batteriezellen (20), die entlang einer ersten Richtung (x) angeordnet sind;
   ein wärmeleitendes Element (101), das eine flache Platte ist, die sich entlang der ersten Richtung (x) erstreckt und mit einer ersten Wand (2111) jeder Batteriezelle (20) in den mehreren Batteriezellen (20) verbunden ist, wobei die erste Wand (2111) eine Wand mit der größten Oberfläche in der Batteriezelle (20) ist, wobei das wärmeleitende Element (101) dazu konfiguriert ist, Wärme der Batteriezelle (20) zu leiten, und eine mit der ersten Wand (2111) verbundene Oberfläche des wärmeleitenden Elements (101) eine isolierende Oberfläche ist, wobei die erste Wand (2111) parallel zur ersten Richtung (x) verläuft;
   wobei eine Abmessung des wärmeleitenden Elements (101) in einer zweiten Richtung (y) 0,1 bis 100 mm beträgt und die zweite Richtung (y) senkrecht zur ersten Wand (2111) steht;
   wobei die Batteriezelle (20) die beiden ersten Wände (2111), die einander in der zweiten Richtung (y) gegenüberliegen, und zwei zweite Wände (2112) umfasst, die einander in der ersten Richtung (x) gegenüberliegen, und wobei die zweiten Wände (2112) der beiden benachbarten Batteriezellen (20) in der ersten Richtung (x) einander gegenüberliegen;
   wobei das wärmeleitende Element (101) eine Metallplatte (1011) und eine Isolierschicht (1012) umfasst und die Isolierschicht (1012) auf einer Oberfläche der Metallplatte (1011) vorgesehen ist;
   wobei in dem wärmeleitenden Element (101) ein Hohlraum (1013) vorgesehen ist;
   und wobei die Batterie mehrere Spalten der mehreren Batteriezellen (20), die entlang der ersten Richtung (x) angeordnet sind, und mehrere wärmeleitende Elemente (101) umfasst, und wobei die mehreren Spalten der Batteriezellen (20) und die mehreren wärmeleitenden Elemente (101) abwechselnd in der zweiten Richtung (y) vorgesehen sind.

2. Batterie nach Anspruch 1, wobei das wärmeleitende Element (101) eine Platte aus einem nichtmetallischen Material ist.

3. Batterie nach Anspruch 1, wobei der Hohlraum (1013) so konfiguriert ist, dass er ein Fluid aufnimmt, um die Temperatur der Batteriezelle (20) einzustellen.

4. Batterie nach einem der Ansprüche 1 bis 3, wobei eine Abmessung T1 der Batteriezelle (20) in der zweiten Richtung (y) und eine Abmessung T2 des wärmeleitenden Elements (101) in der zweiten Richtung (y) Folgendes erfüllen:

$$0 < T2/T1 \leq 7.$$

5. Batterie nach Anspruch 4, wobei $0 < T2/T1 \leq 1$ gilt.

6. Batterie nach einem der Ansprüche 1 bis 5, wobei ein Gewicht M1 der Batteriezelle (20) und ein Gewicht M2 des wärmeleitenden Elements (101) Folgendes erfüllen: 0<M2/M1≤20.

7. Batterie nach Anspruch 6, wobei 0,1≤M2/M1≤1 gilt.

8. Batterie nach einem der Ansprüche 1 bis 7, wobei eine Fläche S1 der ersten Wand (2111) und eine Fläche S2 einer mit der ersten Wand (2111) der mehreren Batteriezellen (20) verbundenen Oberfläche des wärmeleitenden Elements (101) Folgendes erfüllen: 0,2≤S2/S1≤30.

9. Batterie nach Anspruch 8, wobei 2≤S2/S1≤10 gilt.

10. Batterie nach einem der Ansprüche 1 bis 9, wobei eine spezifische Wärmekapazität Q des wärmeleitenden Elements (101) und ein Gewicht M2 des wärmeleitenden Elements (101) Folgendes erfüllen: $0{,}02 \text{ KJ}/(kg^2 \text{*°C}) \leq Q/M2 \leq 100 \text{ KJ}/(kg^2 \text{*°C})$.

11. Batterie nach Anspruch 10, wobei $0{,}3 \text{ KJ}/(kg^2 \text{*°C}) \leq Q/M2 \leq 20 \text{ KJ}/(kg^2 \text{*°C})$ gilt.

12. Batterie nach einem der Ansprüche 1 bis 11, wobei die Batterie mehrere Batteriemodule (100) umfasst, wobei das Batteriemodul (100) mindestens eine Spalte der mehreren Batteriezellen (20), die entlang der ersten Richtung (x) angeordnet sind, und mindestens ein wärmeleitendes Element (101) umfasst, und wobei die mindestens eine Spalte der Batteriezellen (20) und das mindestens eine wärmeleitende Element (101) abwechselnd in der zweiten Richtung (y) vorgesehen sind.

13. Batterie nach Anspruch 12, wobei das Batteriemodul (100) N Spalten der Batteriezellen (20) und das/die N-1 wärmeleitende(n) Element(e) (101) umfasst, wobei das/die wärmeleitende(n) Element(e) (101) zwischen zwei benachbarten Spalten der Batteriezellen (20) vorgesehen ist/sind und N eine ganze Zahl größer als 1 ist.

14. Batterie nach Anspruch 12 oder 13, wobei die mehreren Batteriemodule (100) entlang der zweiten Richtung (y) angeordnet sind und zwischen den benachbarten Batteriemodulen (100) ein Spalt vorhanden ist.

15. Batterie nach einem der Ansprüche 1 bis 14, wobei das wärmeleitende Element mit der ersten Wand (2111) verbunden ist.

16. Leistungsverbrauchende Vorrichtung, umfassend: die Batterie (10) nach einem der Ansprüche 1 bis 15, wobei die Batterie (10) dazu konfiguriert ist, elektrische Energie zu liefern.


**Revendications**

1. Batterie, **caractérisée en ce qu'**elle comprend :

   une pluralité de cellules de batterie (20) disposées dans une première direction (x) ;
   un élément conducteur de chaleur (101) qui est une plaque plate s'étendant dans la première direction (x) et connecté à une première paroi (2111) de chaque cellule de batterie (20) de la pluralité de cellules de batterie (20), la première paroi (2111) étant une paroi ayant la plus grande surface dans la cellule de batterie (20), l'élément conducteur de chaleur (101) étant configuré pour conduire la chaleur de la cellule de batterie (20), et une surface de l'élément conducteur de chaleur (101) connectée à la première paroi (2111) étant une surface isolante, et la première paroi (2111) étant parallèle à la première direction (x) ;
   dans laquelle une dimension de l'élément conducteur de chaleur (101) dans une seconde direction (y) est de 0,1 à 100 mm, et la seconde direction (y) est perpendiculaire à la première paroi (2111) ;
   dans laquelle la cellule de batterie (20) comprend les deux premières parois (2111) prévues à l'opposé l'une de l'autre dans la seconde direction (y) et deux secondes parois (2112) prévues à l'opposé l'une de l'autre dans la première direction (x), et dans laquelle les secondes parois (2112) des deux cellules de batterie (20) adjacentes sont opposées dans la première direction (x) ;
   dans laquelle l'élément conducteur de chaleur (101) comprend une plaque métallique (1011) et une couche isolante (1012), et la couche isolante (1012) est prévue sur une surface de la plaque métallique (1011) ;
   dans laquelle une cavité (1013) est prévue dans l'élément conducteur de chaleur (101) ;
   et dans laquelle la batterie comprend une pluralité de colonnes de la pluralité de cellules de batterie (20) disposées dans la première direction (x) et une pluralité d'éléments conducteurs de chaleur (101), et dans laquelle la pluralité de colonnes de cellules de batterie (20) et la pluralité d'éléments conducteurs de chaleur (101) sont prévues de manière alternative dans la seconde direction (y).

2. Batterie selon la revendication 1, dans laquelle l'élément conducteur de chaleur (101) est une plaque en matériau non métallique.

3. Batterie selon la revendication 1, dans laquelle la cavité (1013) est configurée pour accueillir un fluide afin de réguler la température de la cellule de batterie (20).

4. Batterie selon l'une quelconque des revendications 1 à 3, dans laquelle une dimension T1 de la cellule de batterie (20) dans la seconde direction (y) et une dimension T2 de l'élément conducteur de chaleur (101) dans la seconde direction (y) satisfont à : $0 < T2/T1 \leq 7$.

5. Batterie selon la revendication 4, dans laquelle $0 < T2/T1 \leq 1$.

6. Batterie selon l'une quelconque des revendications 1 à 5, dans laquelle un poids M1 de la cellule de batterie (20) et un poids M2 de l'élément conducteur de chaleur (101) satisfont à : $0 < M2/M1 \leq 20$.

7. Batterie selon la revendication 6, dans laquelle $0,1 \leq M2/M1 \leq 1$.

8. Batterie selon l'une quelconque des revendications 1 à 7, dans laquelle une surface S1 de la première paroi (2111) et une surface S2 d'une surface de l'élément conducteur de chaleur (101) connectée à la première paroi (2111) de la pluralité de cellules de batterie (20) satisfont à : $0,2 \leq S2/S1 \leq 30$.

9. Batterie selon la revendication 8, dans laquelle $2 \leq S2/S1 \leq 10$.

10. Batterie selon l'une quelconque des revendications 1 à 9, dans laquelle une capacité thermique spécifique Q de l'élément conducteur de chaleur (101) et un poids M2 de l'élément conducteur de chaleur (101) satisfont à : $0,02$ $KJ/(kg^{2}*°C) \leq Q/M2 \leq 100\ KJ/(kg^{2}*°C)$.

11. Batterie selon la revendication 10, dans laquelle $0,3\ KJ/(kg^{2}*°C) \leq Q/M2 \leq 20\ KJ/(kg^{2}*°C)$.

12. Batterie selon l'une quelconque des revendications 1 à 11, dans laquelle la batterie comprend une pluralité de modules de batterie (100), le module de batterie (100) comprend au moins une colonne de la pluralité de cellules de batterie (20) disposées dans la première direction (x) et l'au moins un élément conducteur de chaleur (101), et l'au moins une colonne de cellules de batterie (20) et l'au moins un élément conducteur de chaleur (101) sont prévus de manière alternative dans la seconde direction (y).

13. Batterie selon la revendication 12, dans laquelle le module de batterie (100) comprend N colonnes des cellules de batterie (20) et les N-1 éléments conducteurs de chaleur (101), l'élément conducteur de chaleur (101) est prévu entre deux colonnes adjacentes des cellules de batterie (20), et N est un entier supérieur à 1.

14. Batterie selon la revendication 12 ou 13, dans laquelle la pluralité de modules de batterie (100) est disposée dans la seconde direction (y), et un espace est prévu entre les modules de batterie (100) adjacents.

15. Batterie selon l'une quelconque des revendications 1 à 14, dans laquelle l'élément conducteur de chaleur est relié à la première paroi (2111).

16. Dispositif de consommation d'énergie, comprenant : la batterie (10) selon l'une quelconque des revendications 1 à 15, et la batterie (10) étant configurée pour fournir de l'énergie électrique.

1

FIG. 1

FIG. 2

FIG. 3

FIG. 4

<u>101</u>

FIG. 5

FIG. 6

<u>10</u>

FIG 7

300

| providing a plurality of battery cells arranged along a first direction | 310 |

| providing a heat conducting member | 320 |

FIG 8

400

| a first provision module | 410 |

| a second provision module | 420 |

FIG 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20200066421 A
- US 2015200428 A1
- WO 2020096224 A1
- GB 380312020 A